# FASCICULE DE BREVET EUROPEEN

(11) **EP 4 165 545 B1**
(45) Date de publication et mention de la délivrance du brevet: **10.12.2025**
(21) Numéro de dépôt: 21730239.7
(22) Date de dépôt: 08.06.2021
(51) Int. Cl.: G06V 10/40, G06V 20/20, G06V 20/64

(54) **DISPOSITIF ET PROCEDE POUR L'ACQUISITION D'IMAGES D'UNE PAIRE DE LUNETTES**
VORRICHTUNG UND VERFAHREN ZUR ERFASSUNG VON BILDERN EINER BRILLE
DEVICE AND METHOD FOR ACQUIRING IMAGES OF A PAIR OF SPECTACLES

(30) Priorité: 12.06.2020 FR 2006159
(43) Date de publication de la demande: 19.04.2023
(73) Titulaire: ACEP TRYLIVE, 75017 Paris (FR)
(72) Inventeur: MOBUCHON, Pascal, 75019 PARIS (FR); SAYAG, Jean-Philippe, 75017 PARIS (FR)
(74) Mandataire: Oudin, Stéphane
(86) Numéro de dépôt international: PCT/EP2021/065338
(87) Numéro de publication internationale: WO 2021/250027

(56) Documents cités:
- US-A1- 2014 043 332
- US-A1- 2015 055 085
- US-A1- 2016 327 814

## Description

### Domaine technique de l'invention

La présente invention concerne le domaine de la simulation en réalité augmentée pour l'optique et plus particulièrement, le domaine de l'essayage virtuel de paires de lunettes.

### Etat de la technique

Dans le domaine de l'essayage virtuel, il est connu d'utiliser la réalité augmentée pour permettre aux clients l'essayage à distance de plusieurs paires de lunettes préalablement modélisées en 3D.

Cependant, pour rendre possible ce type d'essayage, un travail de modélisation 3D est nécessaire en amont pour chaque paire de lunettes. Il existe différentes techniques de modélisation: manuellement, par modification de modèles de CAO, par acquisition d'images, par scan 3D etc... mais le recours à ces techniques impose généralement l'usage de nombreuses ressources (outils, temps...). Par exemple, dans le cas de la modélisation 3D par l'acquisition d'images, il faut d'une part, la capture d'images de paires de lunettes dans des conditions particulières (luminosité, positionnement de la paire etc), sous plusieurs angles (image de la paire de lunettes de face, images des branches), et d'autre part, le traitement de ces images par des outils de modélisation complexes nécessitant l'intervention de personnes qualifiées dans le domaine. Concernant la phase de capture d'images, plusieurs dispositifs portables et bas coûts permettant la capture d'images d'objets existent déjà (cabine photo portable par exemple). Bien que ce type de dispositifs soit connu pour sa facilité d'utilisation, il n'est pas adapté à un produit de type paire de lunettes (pas de positionnement précis possible...).

Concernant la phase de traitement d'images, la nécessité d'outils de modélisation complexes et la nécessité de l'intervention de personnes qualifiées dans le domaine entraînent des coûts non négligeables pour les professionnels opticiens/lunettiers. Par ailleurs, la modélisation 3D d'une paire de lunettes étant un processus nécessitant un temps considérable, il existe un laps de temps non négligeable entre l'arrivée de nouveaux modèles de paires de lunettes en magasin et leurs disponibilités pour leur essayage virtuel.

On connaît également des dispositifs ou procédés tels que ceux décrits dans les demandes de brevets américaines US2014/043332, US2016/327814 et US2015/055085. Toutefois, ces dispositifs ou procédés ne sont pas satisfaisants.

### Résumé de l'invention

L'invention est tel que revendiquée dans les revendications indépendantes. Le but de la présente invention est donc de pallier les inconvénients précédemment cités et de proposer un dispositif et un procédé d'acquisition d'images de paires de lunettes, très bas coût, simple et rapide d'utilisation, permettant l'acquisition d'une image exploitable pour un essayage en réalité augmentée par une personne non qualifiée dans le domaine.

Conformément à l'invention, il est donc proposé un dispositif pour l'acquisition d'images d'une paire de lunettes comportant une surface plane délimitée par un contour de forme et de dimensions connues, ladite surface plane étant remarquable en ce qu'elle comporte au moins, en périphérie:
- un moyen de redressage,
- une référence de taille,
au centre:
- une zone d'acquisition ayant une couleur non réfléchissante, homogène, ladite zone d'acquisition comportant au moins deux ouvertures destinées à supporter les branches de ladite paire, et au moins un repère de position représentant les pupilles d'un porteur, de sorte à faciliter le positionnement en hauteur des verres de lunettes sur ladite zone d'acquisition.

On appelle « moyen de redressage », un moyen utilisé pour obtenir une image parfaitement de face d'un objet, il en existe deux types, ceux utilisés en amont de la capture d'image : support de positionnement de l'appareil d'acquisition d'images par exemple, ceux utilisés en aval de la capture d'image : repère utilisé pour traiter l'image et supprimer les effets de perspectives.

On appelle « référence de taille », un moyen de taille connue permettant de retrouver l'échelle de taille des objets d'une image.

On appelle « porteur », un individu portant la paire de lunettes sur son visage.

Préférentiellement, la surface plane a un contour de forme rectangulaire et présente une mire colorimétrique.

Avantageusement, le moyen de redressage et la référence de taille sont un cadre noir marquant ledit contour de dimensions connues.

De manière préférée, la mire colorimétrique est positionnée entre le cadre noir et la zone d'acquisition.

De manière préférentielle, les ouvertures comportent des moyens d'ajustement de couleur identique à celle de la zone d'acquisition permettant audites ouvertures de s'adapter à différents types de branches de lunettes.

On appelle « moyens d'ajustement », l'ensemble des moyens utilisés pour limiter le périmètre d'une ouverture au seul espace suffisant au passage d'une branche de la paire de lunettes.

De manière encore plus préférentielle, les moyens d'ajustement comportent au moins deux caches en forme de U dont la largeur de l'ouverture peut varier en fonction de la largeur des branches de lunettes, un cache en forme de rectangle et sont destinés à être disposés à l'avant des ouvertures afin de limiter leurs surfaces.

De manière avantageuse, la zone d'acquisition comporte un moyen d'identification codé permettant l'obtention d'informations concernant ledit dispositif.

L'invention concerne aussi un procédé d'acquisition d'images d'une paire de lunettes à l'aide d'un dispositif tel que décrit précédemment, remarquable en ce qu'il comporte au moins les étapes suivantes :
a) Phase d'Identification sur un terminal professionnel :
   a1) Affichage sur un périphérique de sortie du terminal professionnel d'une page web d'acquisition,
   a2) Identification du professionnel,
b) Phase d'Acquisition :
   b1) Mise en place d'une paire de lunettes sur la zone d'acquisition d'un dispositif (1),
   b2) Capture d'une image de la surface plane d'un dispositif (1) supportant la paire de lunettes à l'aide d'un périphérique d'acquisition d'image d'un terminal professionnel,
   b3) Acquisition du moyen d'identification codé,
c) Phase de traitement d'image,
   c1) Extraction de la monture de la paire de lunettes,
   c2) Envoi d'une image détourée de la paire de lunettes et des caractéristiques de la paire de lunettes à un serveur d'essayage virtuel,
   c3) Génération par le serveur d'un modèle 3D de lunettes à partir de l'image détourée,
   c4) Génération d'une page web d'essayage virtuel par le terminal professionnel,
d) Phase d'essayage :
   d1) Envoi de la page web d'essayage virtuel au terminal d'un client,
   d2) Capture d'une image du visage du client à l'aide d'un périphérique d'acquisition d'image du terminal client ou chargement d'une image du visage du client à partir d'une galerie photos,
   d3) Incrustation du modèle 3D de lunettes sur l'image du visage du client pour former une image d'essayage,

On appelle « moyen d'identification codé » un code ou un moyen visuel propre à la paire de lunettes. (QR code par exemple)

On appelle « image détourée d'une paire de lunettes » une image de la paire de lunettes sur laquelle on supprime complétement le fond de l'image, on ne garde que la partie paire de lunettes.

De manière préférée, après l'étape a2, il existe une étape a3 : Recherche du modèle 3D de la paire de lunettes dans un catalogue présent sur le serveur, et :
- si la paire de lunettes n'est pas présente dans le catalogue : après l'étape c3, il existe une étape c3' : Enregistrement du modèle 3D de la paire de lunettes dans le catalogue sur le serveur,
- si la paire de lunettes est présente dans le catalogue : les phases d'acquisition et de traitement d'image ne sont pas effectuées et la phase d'essayage est effectuée à partir du modèle 3D de lunettes du catalogue,

De manière encore plus préférée, l'étape c1 comprend les sous étapes suivantes :
c11) Redressage de l'image de la surface plane du dispositif (1) supportant la paire de lunette,
   c111) Détection du moyen de redressage,
   c112) Correction de perspective,
   c113) Extraction de la zone de l'image contenant la paire de lunettes,
c12) Détourage de la monture de la paire de lunettes,
   c121) Suppression du fond coloré,
   c122) Normalisation de la résolution.

### Brève description des figures

D'autres avantages et caractéristiques sont décrites ci-dessous.
[Fig 1] est une vue de face du dispositif selon l'invention.
[Fig 2] est une vue d'ensemble d'un dispositif selon l'invention et d'un appareil d'acquisition d'image.
[Fig 3] est un organigramme du procédé conforme à l'invention.
[Fig 4] est une représentation schématique d'un moyen d'ajustement de type système 2 caches à 2 degrés de liberté pour les ouvertures du dispositif selon l'invention.
[Fig 5] est une représentation schématique d'un moyen d'ajustement de type système 4 caches à 1 degré de liberté pour les ouvertures du dispositif selon l'invention.
[Fig 6] est une représentation schématique d'un moyen d'ajustement de type système 3 caches pour les ouvertures du dispositif selon l'invention.

### Description des modes de réalisation

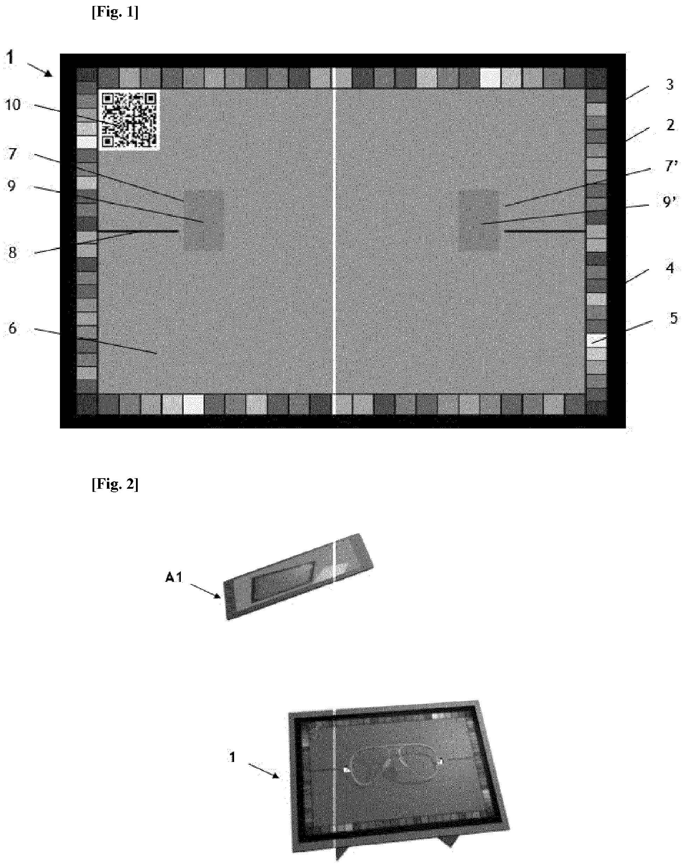

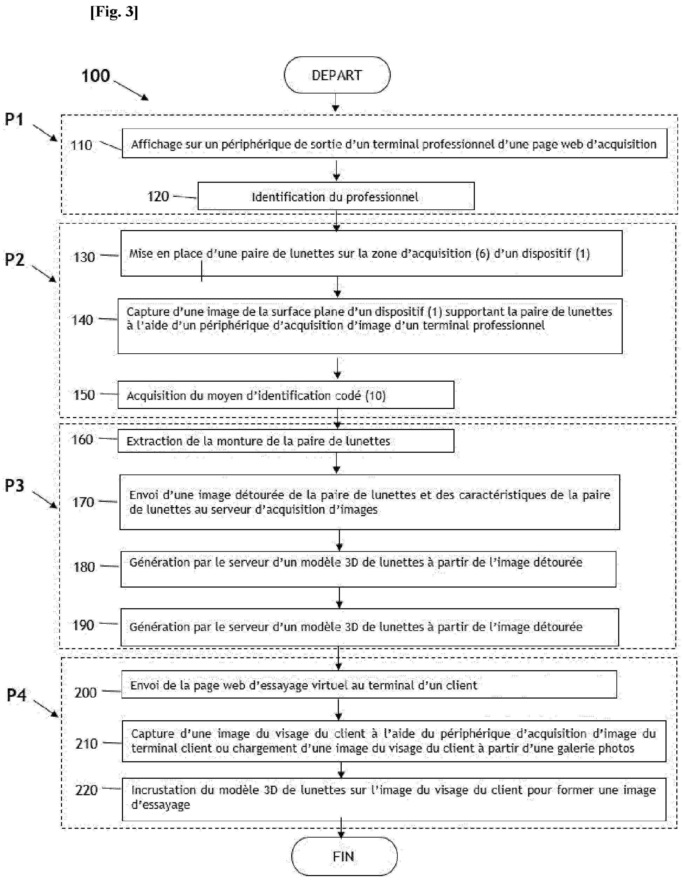

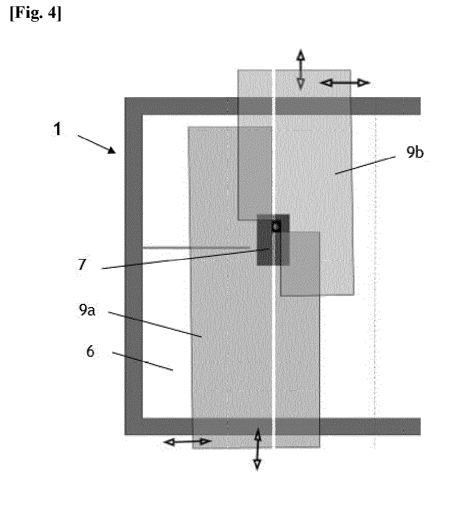

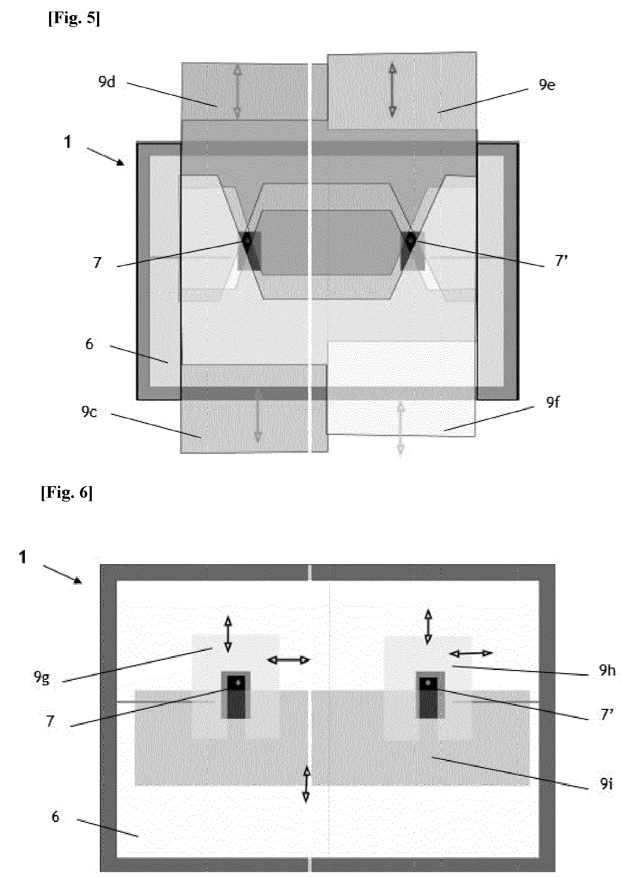

Conformément aux figures 1 à 6, il est donc proposé un dispositif 1 pour l'acquisition d'images d'une paire de lunettes comportant une surface plane délimitée par un contour 2 de forme et de dimensions connues, ladite surface plane étant remarquable en ce qu'elle comporte au moins, en périphérie:
- un moyen de redressage 3,
- une référence de taille 4, et
au centre :
- une zone d'acquisition 6 ayant une couleur non réfléchissante, homogène, ladite zone d'acquisition 6 comportant au moins deux ouvertures 7, 7' destinées à supporter les branches de ladite paire, et au moins un repère de position 8 représentant les pupilles d'un porteur, de sorte à faciliter le positionnement en hauteur des verres de lunettes sur ladite zone d'acquisition 6.

Quel que soit le porteur, ses pupilles se trouvent à peu près à une hauteur identique au niveau du verre de lunettes lorsque les lunettes sont portées. Il est possible de matérialiser cette hauteur par une ligne appelée « ligne du regard ».

La couleur de la zone d'acquisition 6 est choisie en fonction de la couleur de la paire de lunettes, le but étant que la couleur de la paire de lunettes se démarque le plus possible de la couleur de fond de la zone d'acquisition 6. Avantageusement, la couleur de la zone d'acquisition 6 est une couleur de fond antireflet (mate). Ces choix au niveau de la couleur de la zone d'acquisition 6 permettront de faciliter le détourage. Préférentiellement, la surface plane a un contour 2 de forme rectangulaire et présente une mire colorimétrique 5.

Cette surface plane est préférentiellement de dimension A4 pour être facilement transportable, elle peut être munie de pieds de 10 à 15 cm de hauteur, pour permettre son maintien en position horizontale en réservant un espace suffisant aux branches de la paire de lunettes.

Avantageusement, le moyen de redressage 3 et la référence de taille 4 sont un cadre noir marquant ledit contour 2 de dimensions connues. Le fait que le cadre noir ait des dimensions connues (longueur et largeur) permet de redresser aisément une image qui n'aurait pas été correctement prise de face. En effet, lorsque l'image de face n'a pas été correctement prise, les dimensions du cadre mesurées sur l'image ne sont plus les mêmes. Il est alors possible de déformer l'image pour obtenir le cadre avec ses dimensions initiales. Plusieurs paramètres de l'image sont ainsi corrigés (orientation, perspective...) permettant ainsi d'obtenir une vue parfaitement de face du dispositif 1. Plusieurs autres moyens peuvent être utilisés dans l'objectif d'un redressage, dans certains cas, l'appareil d'acquisition d'image peut être installé sur un support spécifique qui permettra de régler son positionnement par rapport à la surface plane et à maîtriser l'angle de prise de vue. Par ailleurs, ce cadre noir joue également un rôle de référence de taille 4 ou d'échelle, puisque les dimensions réelles de celui-ci sont connues. D'autres références de tailles 4 pourront être utilisées (règle graduée, damier...). Enfin, ce cadre en marquant le contour 2 de la surface plane de sa couleur noire, délimite parfaitement le support d'acquisition 6 et facilite le recadrage de l'image.

De manière préférée, la mire colorimétrique 5 est positionnée entre le cadre noir et la zone d'acquisition 6.. Elle est capturée par un appareil d'acquisition d'images et sert de référence afin de corriger les éventuels écarts de couleur constatés entre la couleur de l'objet réel et la couleur de l'objet sur l'image. Ces écarts de couleurs observés peuvent être notamment liés à l'éclairage lors de la capture photo.

De manière préférentielle, les ouvertures 7, 7' comportent des moyens d'ajustement 9, 9a, 9b, 9c, 9d, 9e, 9f, 9g, 9h, 9i, de couleur identique à celle de la zone d'acquisition 6, permettant audites ouvertures 7, 7' de s'adapter à différents types de branches de lunettes. Les différentes paires de lunettes existantes sur le marché présentent des branches de différentes formes et épaisseurs qui peuvent s'embrancher sur le haut de la monture, au 1/3-2/3 de la hauteur de la monture ou au milieu. Pour pouvoir supporter ces différentes variétés de branches, les ouvertures 7, 7' sont conçues avec un périmètre assez important, de l'ordre de 30 sur 30 mm pour des ouvertures 7, 7' rectangulaires. L'importance de la taille de ces ouvertures 7, 7' peut engendrer des difficultés lors de l'étape de détourage, c'est pourquoi des moyens d'ajustements 9, 9a, 9b, 9c, 9d, 9e, 9f, 9g, 9h, 9i, de couleur identique à celle de la surface d'acquisition 6 sont utilisés.

Ces moyens d'ajustement 9, 9a, 9b, 9c, 9d, 9e, 9f, 9g, 9h, 9i, viennent limiter au seul espace suffisant au passage des branches de la paire de lunettes les ouvertures 7, 7'.

De manière encore plus préférentielle, les moyens d'ajustement 9, 9a, 9b, 9c, 9d, 9e, 9f, 9g, 9h, 9i, comportent au moins deux caches en forme de U, 9g, 9h, dont la largeur de l'ouverture peut varier en fonction de la largeur des branches de lunettes et un cache 9i, en forme de rectangle et sont destinés à être disposés à l'avant des ouvertures 7, 7' afin de limiter leurs surfaces. Les fentes ou ouvertures de ces caches 9g, 9h, peuvent avoir 3 largeurs différentes (4, 7 ou 8mm) de sorte à s'adapter à l'ensemble des montures sur le marché. Les caches 9g, 9h, en forme de U limitent par leurs morphologies la hauteur et la largeur des ouvertures 7, 7', ils ont 2 degrés de liberté. La cache rectangulaire 9i, limite la hauteur uniquement et a 1 degré de liberté. D'autres moyens d'ajustements 9, 9a, 9b, 9c, 9d, 9e, 9f, 9g, 9h, 9i, de couleur identique à la zone d'acquisition 6 peuvent être envisagés, comme par exemple :
- trames de fils : deux trames de fils sont superposées perpendiculairement (ie. une trame orientée à 90° de l'autre),
- matériaux meubles : de type sable ou gel dans lesquels les branches peuvent s'enfoncer,
- tissu avec fente de type boutonnière ou étoile,
- système de caches 9, 9a avec 2 degrés de liberté : chaque ouverture 7, 7' peut être occultée par deux caches 9, 9a, un premier 9a en forme de L et un deuxième 9b en forme de L retourné à 90° dans le sens des aiguilles d'une montre,
- système de 4 caches 9b, 9c, 9d, 9e, 9f, à 1 degré de liberté: 2 caches en forme de dent 9c, 9d et 2 en forme de crémaillères 9e, 9f, les différents caches 9b, 9c, 9d, 9e, 9f, de formes complémentaires étant positionnés en miroir et superposés 2 par 2, l'ouverture restante aura une forme de losange.

De manière avantageuse, la zone d'acquisition 6 comporte un moyen d'identification codé 10 permettant l'obtention d'informations concernant ledit dispositif 1. Ce moyen d'identification peut être un QR code par exemple. Il permet de connaître la dimension du dispositif 1 par exemple.

L'invention concerne aussi un procédé 100 d'acquisition d'images d'une paire de lunettes à l'aide d'un dispositif 1 tel que décrit précédemment, remarquable en ce qu'il comporte au moins les étapes suivantes :
a) Phase d'Identification P1 sur un terminal professionnel A1:
   a1) Affichage sur un périphérique de sortie du terminal professionnel A1 d'une page web d'acquisition 110,
   a2) Identification du professionnel 120,
b) Phase d'Acquisition P2:
   b1) Mise en place d'une paire de lunettes sur la zone d'acquisition 6 d'un dispositif 1, 130,
   b2) Capture d'une image de la surface plane d'un dispositif 1 supportant la paire de lunettes à l'aide d'un périphérique d'acquisition d'image d'un terminal professionnel A1,140,
   b3) Acquisition du moyen d'identification codé 10, 150,
c) Phase de traitement d'image P3,
   c1) Extraction de la monture de la paire de lunettes 160,
   c2) Envoi d'une image détourée de la paire de lunettes et des caractéristiques de la paire de lunettes à un serveur d'essayage virtuel 170,
   c3) Génération par le serveur d'un modèle 3D de lunettes à partir de l'image détourée 180,
   c4) Génération d'une page web d'essayage virtuel par le terminal professionnel A1,190,
d) Phase d'essayage P4 :
   d1) Envoi de la page web d'essayage virtuel au terminal d'un client 200,
   d2) Capture d'une image du visage du client à l'aide du périphérique d'acquisition d'image du terminal client ou chargement d'une image du visage du client à partir d'une galerie photos 210,
   d3) Incrustation du modèle 3D de lunettes sur l'image du visage du client pour former une image d'essayage 220.

Préférentiellement, il existe entre c1, 160, et c2,170, une étape c1': Vérification visuelle de la qualité de l'extraction. Au cours de cette étape, le professionnel vérifie la prise de vue, la présence ou non de reflets parasites, la qualité du détourage... Il est également possible d'afficher la paire de lunettes superposée à un visage et de modifier manuellement le calage de la monture (principalement en hauteur), mais aussi de faire une retouche manuelle de la colorimétrie (saturation etc.)

De manière préférée, après l'étape a2 120, il existe une étape a3 : Recherche du modèle 3D de la paire de lunettes dans un catalogue présent sur le serveur, et :
- si la paire de lunettes n'est pas présente dans le catalogue : après l'étape c3 180, il existe une étape c3' : Enregistrement du modèle 3D de la paire de lunettes dans le catalogue sur le serveur,
- si la paire de lunettes est présente dans le catalogue : les phases d'acquisition P1 et de traitement d'image P2 ne sont pas effectuées et la phase d'essayage P4 est effectuée à partir du modèle 3D de lunettes du catalogue.

Les terminaux professionnel A1 et client peuvent être des ordinateurs, des tablettes, ou des téléphones mobiles. On peut envisager qu'ils soient en communication par internet.

De manière encore plus préférée, l'étape c1 160 comprend les sous étapes suivantes :
c11) Redressage de l'image de la surface plane du dispositif (1) supportant la paire de lunette 161,
   c111) Détection du moyen de redressage 161a,
   c112) Correction de perspective 161b,
   c113) Extraction de la zone de l'image contenant la paire de lunettes 161c,
c12) Détourage de la monture de la paire de lunettes 162,
   c121) Suppression du fond coloré 162a,
   c122) Normalisation de la résolution 162b.

Le processus global de redressage 161 est le suivant : Détection du cadre noir sur l'image capturée, Déformation (warp) de l'image pour obtenir cadre noir de dimensions identiques à celles du cadre noir du support, recadrage (crop) au niveau du cadre noir pour avoir une image de dimensions connues (image aux dimensions du cadre), recadrage (crop) de la zone d'intérêt (la taille métrique de la zone d'intérêt est fixe et dépendante du mesh utilisé pour le modèle 3D). Les traitements utilisés pour cette étape sont les suivants : Filtrage morphologique, seuillage adaptatif, détection de contour, sélection de contours sur la base des contraintes du dispositif 1, homographie. Pour le détourage 162, le processus global est le suivant : à partir de l'image obtenue à l'étape précédente, extraction du fond et génération d'un plan de transparence, Redimensionnement (resize) de l'image pour obtenir la texture finale en respectant les contraintes sur la résolution. L'algorithme utilisé pour l'extraction se base sur une mesure de distance dans l'espace colorimétrique HSV. En fonction de la distance, un seuillage est appliqué avec la gestion d'une rampe d' anti-crénelage (anti-aliasing) au niveau de la frontière. D'autres algorithmes sont potentiellement utilisables : Seuillage, Watershed, Flood Fill, Histogram back projection, Grab Cut, Détection Contour...

Préférentiellement, après l'étape c12, 162, il existe une étape c13 de correction automatique permettant la correction d'erreurs liées à l'étape b2, 140, de capture (monture capturée non horizontale...). Pendant cette étape, la monture détourée peut subir une légère rotation (afin que la paire de lunettes soit bien positionnée selon un plan horizontal) ou encore un centrage horizontal.

Avantageusement, l'étape c1, 160, est effectuée par un algorithme d'intelligence artificielle. Pour certains types de paires de lunettes, paire de solaires ou paires de lunettes avec montures invisibles l'étape de détourage 160 peut s'avérer très difficile. On peut donc imaginer que cette étape 160 soit effectuée par un algorithme d'intelligence artificielle entraîné sur un catalogue de plusieurs modèles de paires de lunettes. L'algorithme sera ainsi de plus en plus performant. Dans ce cas, le détourage sera effectué par le serveur et pas par le terminal professionnel A1.

Le procédé 100 peut également prévoir une étape d'extraction des verres de lunettes. Cette étape délimitant la zone occupée par des verres de lunettes sur une paire, aura pour but d'appliquer une déformation au niveau de cette zone afin de simuler l'effet qu'auront les verres de lunettes. En effet, en fonction de la correction prescrite par l'ophtalmologue, les verres de lunettes occasionnent une déformation de la zone sur laquelle ils sont placés. Le rendu de l'essayage sera ainsi encore plus réaliste.

L'invention concerne enfin un système pour l'acquisition d'images remarquable en ce qu'il comporte au moins :
- un dispositif 1 d'acquisition d'images tel que décrit précédemment,
- un terminal client en communication avec un terminal professionnel A1, comportant au moins un périphérique d'entrée et de sortie permettant au moins la mise en œuvre de la phase d'essayage P4 du procédé 100 tel que décrit précédemment,
- un terminal professionnel A1 en communication avec ledit terminal client et un serveur, comportant au moins un périphérique d'entrée et de sortie permettant au moins la mise en œuvre des phases d'identification P1, d'acquisition P2, les étapes c1, c2 et c4, 160,170, 180 de la phase de traitement d'image P3, du procédé 100 tel que décrit précédemment,
- un serveur d'essayage virtuel en communication avec le terminal professionnel A1, ledit serveur étant conçu pour mettre en œuvre au moins l'étape c3 180 de la phase de traitement d'image P3 du procédé 100 tel que décrit précédemment

Les terminaux professionnel A1 et client peuvent être des ordinateurs, des tablettes, ou des téléphones mobiles. On peut envisager que la communication entre les différentes entités du système soit établie par internet.

Le procédé 100 d'acquisition d'image est utilisé avec le dispositif 1 d'acquisition d'images précédemment décrit. Toutefois, ce procédé peut être utilisé avec tout type de support connu de l'Homme du métier.

Le dispositif 1 d'acquisition d'images de paires de lunettes et le procédé 100 conformes à l'invention trouvent une application particulière dans l'essayage virtuel de lunettes. Toutefois, il est évident que le dispositif 1 d'acquisition d'images de paires de lunettes et le procédé 100 peuvent être adaptés et utilisés pour l'acquisition d'image d'autres types de matériels.

Enfin, il va de soi que les exemples de dispositif 1 d'acquisition d'images de paires de lunettes et le procédé 100 conformes à l'invention qui viennent d'être décrits ne sont que des illustrations particulières, en aucun cas limitatives de l'invention.

## Revendications

1. Dispositif (1) pour l'acquisition d'images d'une paire de lunettes comportant une surface plane délimitée par un contour (2) de forme et de dimensions connues, ladite surface plane étant **caractérisé en ce qu'**elle comporte au moins, en périphérie: un cadre noir marquant ledit contour (2) de dimensions connues,
et au centre:
- une zone d'acquisition (6) ayant une couleur non réfléchissante, homogène, ladite zone d'acquisition (6) comportant au moins deux ouvertures (7, 7') destinées à supporter les branches de ladite paire, et au moins un repère de position (8) représentant les pupilles d'un porteur, de sorte à faciliter le positionnement en hauteur des verres de lunettes sur ladite zone d'acquisition (6).

2. Dispositif (1) selon la revendication précédente **caractérisé en ce que** la surface plane a un contour (2) de forme rectangulaire et **en ce qu'**elle présente une mire colorimétrique (5).

3. Dispositif (1) selon la revendication 2 **caractérisé en ce que** la mire colorimétrique (5) est positionnée entre le cadre noir et la zone d'acquisition (6).

4. Dispositif (1) selon l'une des revendications précédentes **caractérisé en ce que** les ouvertures (7, 7') comportent des moyens d'ajustement (9, 9a, 9b, 9c, 9d, 9e, 9f, 9g, 9h, 9i) de couleur identique à celle de la zone d'acquisition (6) permettant audites ouvertures (7, 7') de s'adapter à différents types de branches de lunettes.

5. Dispositif (1) selon la revendication 4 **caractérisé en ce que** les moyens d'ajustement (9, 9a, 9b, 9c, 9d, 9e, 9f, 9g, 9h, 9i) comportent au moins deux caches (9g, 9h) en forme de U dont la largeur de l'ouverture peut varier en fonction de la largeur des branches de lunettes, un cache (9i) en forme de rectangle et **en ce qu'**ils sont destinés à être disposés à l'avant des ouvertures (7,7') afin de limiter leurs surfaces.

6. Procédé (100) d'acquisition d'images d'une paire de lunettes à l'aide du dispositif (1) selon les revendications précédentes **caractérisé en ce qu'**il comporte au moins les étapes suivantes :
a) Phase d'Identification (P1) sur un terminal professionnel (A1):
a1) Affichage sur un périphérique de sortie du terminal professionnel (A1) d'une page web d'acquisition (110),
a2) Identification du professionnel (120),
b) Phase d'Acquisition (P2):
b1) Mise en place d'une paire de lunettes sur la zone d'acquisition (6) du dispositif (1) (130),
b2) Capture d'une image de la surface plane du dispositif (1) supportant la paire de lunettes à l'aide d' un périphérique d'acquisition d'image d'un terminal professionnel (A1) (140),
b3) Acquisition d'un moyen d'identification codé propre à la paire de lunettes à partir de l'image (10) (150),
c) Phase de traitement d'image (P3),
c1) Extraction de la monture de la paire de lunettes (160),
c2) Envoi d'une image détourée de la paire de lunettes et des caractéristiques de la paire de lunettes à un serveur d'acquisition d'images (170),
c3) Génération par le serveur d'un modèle 3D de lunettes à partir de l'image détourée (180),
c4) Génération d'une page web d'essayage virtuel par le terminal professionnel (A1) (190),
d) Phase d'essayage (P4) :
d1) Envoi de la page web d'essayage virtuel au terminal d'un client (200),
d2) Capture d'une image du visage du client à l'aide du périphérique d'acquisition d'image du terminal client ou chargement d'une image du visage du client à partir d'une galerie photos (210),
d3) Incrustation du modèle 3D de lunettes sur l'image du visage du client pour former une image d'essayage (220).

7. Procédé (100) selon la revendication précédente **caractérisé en ce qu'**après l'étape a2 (120), il existe une étape a3 : Recherche du modèle 3D de la paire de lunettes dans un catalogue présent sur le serveur, et **en ce que en ce que** :
- si la paire de lunettes n'est pas présente dans le catalogue : après l'étape c3 (180), il existe une étape c3' : Enregistrement du modèle 3D de la paire de lunettes dans le catalogue sur le serveur,
- si la paire de lunettes est présente dans le catalogue : les phases d'acquisition (P1) et de traitement d'image (P2) ne sont pas effectuées et la phase d'essayage (P4) est effectuée à partir du modèle 3D de lunettes du catalogue.

## Patentansprüche

1. Vorrichtung (1) zum Erfassen von Bildern einer Brille mit einer flachen Oberfläche, die durch eine Kontur (2) bekannter Form und Abmessungen begrenzt ist, wobei die flache Oberfläche **dadurch gekennzeichnet ist, dass** sie an dem Rand mindestens Folgendes umfasst: einen schwarzen Rahmen, der die Kontur (2) bekannter Abmessungen markiert, und in der Mitte Folgendes umfasst:
- einen Erfassungsbereich (6) mit einer nicht reflektierenden, homogenen Farbe, wobei der Erfassungsbereich (6) mindestens zwei Öffnungen (7, 7') umfasst, die dazu bestimmt sind, die Bügel der Brille zu tragen, und mindestens eine Positionsmarkierung (8), die die Pupillen eines Trägers darstellt, so dass die Höhenpositionierung der Brillengläser in dem Erfassungsbereich (6) erleichtert wird.

2. Vorrichtung (1) nach dem vorhergehenden Anspruch, **dadurch gekennzeichnet, dass** die flache Oberfläche eine rechteckig geformte Kontur (2) aufweist und dass sie ein kolorimetrisches Muster (5) aufweist.

3. Vorrichtung (1) nach Anspruch 2, **dadurch gekennzeichnet, dass** das kolorimetrische Muster (5) zwischen dem schwarzen Rahmen und dem Erfassungsbereich (6) positioniert ist.

4. Vorrichtung (1) nach einem der vorhergehenden Ansprüche, **dadurch gekennzeichnet, dass** die Öffnungen (7, 7') Einstellmittel (9, 9a, 9b, 9c, 9d, 9e, 9f, 9g, 9h, 9i) umfassen, deren Farbe mit der des Erfassungsbereichs (6) identisch ist, wodurch sich die Öffnungen (7, 7') an verschiedene Arten von Brillenbügeln angepassen lassen.

5. Vorrichtung (1) nach Anspruch 4, **dadurch gekennzeichnet, dass** die Einstellmittel (9, 9a, 9b, 9c, 9d, 9e, 9f, 9g, 9h, 9i) mindestens zwei U-förmige Abdeckungen (9g, 9h), deren Öffnungsbreite je nach Breite der Brillenbügel variieren kann, und eine rechteckförmige Abdeckung (9i) umfassen und dass sie dazu bestimmt sind, an der Vorderseite der Öffnungen (7, 7') angeordnet zu werden, um deren Flächen zu begrenzen.

6. Verfahren (100) zum Erfassen von Bildern einer Brille mithilfe der Vorrichtung (1) nach den vorhergehenden Ansprüchen, **dadurch gekennzeichnet, dass** es mindestens die folgenden Schritte umfasst:
a) Identifikationsphase (P1) auf einem professionellen Endgerät (A1):
a1) Anzeigen einer Erfassungswebseite (110) auf einem Ausgabegerät des professionellen Endgeräts (A1),
a2) Identifizieren des Fachpersonals (120),
b) Erfassungsphase (P2):
b1) Platzieren einer Brille auf dem Erfassungsbereich (6) der Vorrichtung (1) (130),
b2) Aufnehmen eines Bildes der flachen Oberfläche der Vorrichtung (1), auf der die Brille liegt, mithilfe eines Bilderfassungsgeräts eines professionellen Endgeräts (A1) (140),
b3) Erfassen eines für die Brille spezifischen codierten Identifikationsmittels anhand des Bildes (10) (150),
c) Bildverarbeitungsphase (P3),
c1) Extrahieren der Fassung der Brille (160),
c2) Senden eines ausgeschnittenen Bildes der Brille und der Merkmale der Brille an einen Bilderfassungsserver (170),
c3) Erzeugen eines 3D-Brillenmodells aus dem ausgeschnittenen Bild (180) durch den Server,
c4) Erzeugen einer Webseite für die virtuelle Anprobe durch das professionelle Endgerät (A1) (190),
d) Anprobephase (P4):
d1) Senden der Webseite für die virtuelle Anprobe an das Endgerät eines Kunden (200),
d2) Aufnehmen eines Bildes des Gesichts des Kunden mithilfe des Bilderfassungsgeräts des Kundenendgeräts oder Laden eines Bildes des Gesichts des Kunden aus einer Fotogalerie (210),
d3) Einblenden des 3D-Brillenmodells in das Bild des Gesichts des Kunden, um ein Bild der Anprobe (220) zu bilden.

7. Verfahren (100) nach dem vorhergehenden Anspruch, **dadurch gekennzeichnet, dass** es nach Schritt a2 (120) einen Schritt a3 gibt: Suchen des 3D-Modells der Brille in einem Katalog auf dem Server, und dass:
- wenn die Brille nicht in dem Katalog enthalten ist: nach Schritt c3 (180) gibt es einen Schritt c3': Speichern des 3D-Modells der Brille in dem Katalog auf dem Server,
- wenn die Brille in dem Katalog vorhanden ist: die Phasen der Erfassung (P1) und der Bildverarbeitung (P2) werden nicht durchgeführt und die Anprobephase (P4) wird anhand des 3D-Modells der Brille aus dem Katalog durchgeführt.

## Claims

1. A device (1) for acquiring images of a pair of spectacles comprising a flat surface defined by an outline (2) having a known shape and dimensions, said flat surface being **characterised in that** it comprises at least, on the periphery thereof: a black frame marking said outline (2) having known dimensions, and in the centre:
- an acquisition area (6) having a homogenous, nonreflective colour, said acquisition area (6) comprising at least two openings (7, 7') intended to support the legs of said pair, and at least one position marker (8) representing the pupils of a wearer, so as to facilitate the height positioning of the spectacle lenses in said acquisition area (6).

2. The device (1) according to the preceding claim **characterised in that** the flat surface has an outline (2) of rectangular shape and **in that** it has a colorimetric pattern (5).

3. The device (1) according to claim 2 **characterised in that** the colorimetric pattern (5) is positioned between the black frame and the acquisition area (6).

4. The device (1) according to one of the preceding claims, **characterised in that** the openings (7, 7') include adjustment means (9, 9a, 9b, 9c, 9d, 9e, 9f, 9g, 9h, 9i) of identical colour to that of the acquisition area (6) allowing said openings (7, 7') to adapt to different types of spectacle legs.

5. The device (1) according to claim 4 **characterised in that** the adjustment means (9, 9a, 9b, 9c, 9d, 9e, 9f, 9g, 9h, 9i) include at least two U-shaped covers (9g, 9h), the width of the opening of which may vary depending on the width of the legs of the spectacles, a cover (9i) in the shape of a rectangle and **in that** they are intended to be disposed at the front of the openings (7, 7') in order to limit their surfaces.

6. A method (100) for acquiring images of a pair of spectacles using the device (1) according to the preceding claims, **characterised in that** it includes at least the following steps:
a) Phase of Identification (P1) on a professional terminal (A1):
a1) Display on an output peripheral of the professional terminal (A1) of an acquisition web page (110),
a2) Identification of the professional (120),
b) Acquisition Phase (P2):
b1) Placement of a pair of spectacles on the acquisition area (6) of the device (1) (130),
b2) Capture of an image of the flat surface of the device (1) supporting the pair of spectacles using an image acquisition peripheral of a professional terminal (A1) (140),
b3) Acquisition of a coded identification means peculiar to the pair of spectacles from the image (10) (150),
c) Image processing phase (P3),
c1) Extraction of the rack of the pair of spectacles (160),
c2) Sending of a clipped image of the pair of spectacles and the features of the pair of spectacles to an image acquisition server (170),
c3) Generation by the server of a 3D model of spectacles from the clipped image (180),
c4) Generation of a virtual fitting web page by the professional terminal (A1) (190),
d) Fitting phase (P4):
d1) Sending of the virtual fitting web page to a customer terminal (200),
d2) Capture of an image of the customer's face using the image acquisition peripheral of the customer terminal or loading of an image of the customer's face from a photo gallery (210),
d3) Inlay of the 3D model of spectacles on the image of the customer's face to form a fitting image (220).

7. The method (100) according to the preceding claim **characterised in that** after step a2 (120), there is a step a3: Search for the 3D model of the pair of spectacles in a catalogue present on the server, and **in that**:
- if the pair of spectacles is not present in the catalogue: after step c3 (180), there is a step c3': Saving the 3D model of the pair of spectacles in the catalogue on the server,
- if the pair of spectacles is present in the catalogue: the image acquisition (P1) and processing (P2) phases are not carried out and the fitting phase (P4) is carried out from the 3D model of spectacles in the catalogue.
